# EUROPÄISCHE PATENTSCHRIFT

(11) **EP 1 196 915 B1**
(45) Veröffentlichungstag und Bekanntmachung des Hinweises auf die Patenterteilung: **03.09.2003**
(21) Anmeldenummer: 00936783.0
(22) Anmeldetag: 23.05.2000
(51) Int. Cl.: G11B 7/00, G11B 25/02, G11B 7/24

(54) **DATENSPEICHER**
DATA MEMORY
MEMOIRE DE DONNEES

(30) Priorität: 12.07.1999 DE 19932899
(43) Veröffentlichungstag der Anmeldung: 17.04.2002
(73) Patentinhaber: tesa scribos GmbH, 69126 Heidelberg (DE)
(72) Erfinder: LEIBER, Jörn, D-22529 Hamburg (DE); MÜSSIG, Bernhard, D-21218 Seevetal (DE); STADLER, Stefan, 22359 Hamburg (DE); NOEHTE, Steffen, 69469 Weinheim (DE)
(74) Vertreter: Both, Georg
(86) Internationale Anmeldenummer: EP0004673
(87) Internationale Veröffentlichungsnummer: WO01004880

(56) Entgegenhaltungen:
- PATENT ABSTRACTS OF JAPAN vol. 18, no. 235 (P-1732), 28. April 1994 (1994-04-28) & JP 06 020292 A (SANKYO SEIKI MFG CO LTD), 28. Januar 1994 (1994-01-28)
- PATENT ABSTRACTS OF JAPAN vol. 010, no. 278 (P-499), 20. September 1986 (1986-09-20) & JP 61 099981 A (HITACHI LTD), 19. Mai 1986 (1986-05-19)
- PATENT ABSTRACTS OF JAPAN vol. 009, no. 182 (P-376), 27. Juli 1985 (1985-07-27) & JP 60 052941 A (SEIKO EPSON CORP), 26. März 1985 (1985-03-26)

## Beschreibung

Die Erfindung betrifft einen Datenspeicher mit einem spiralartig auf einen Wickelkern aufgewickelten Informationsträger für optisch auslesbare Informationseinheiten.

In der DE 298 16 802, die nicht zum Stand der technik im Sinne vom Artikel 54(2) EPÜ gehört, ist ein Datenspeicher mit einem in mehreren Lagen spiralartig auf einen Wickelkern aufgewickelten Informationsträger für optisch auslesbare Informationseinheiten beschrieben. Der Informationsträger kann eine Polymerfolie aufweisen, wobei sich zwischen benachbarten Lagen jeweils eine Adhäsionsschicht befindet. In diesen Datenspeicher lassen sich Informationen einschreiben, indem die Polymerfolie mit Hilfe eines Schreibstrahls eines Datenlaufwerks lokal erwärmt wird, wodurch sich der Brechungsindex und damit das Reflexionsvermögen (Reflektivität) an der Grenzfläche der Polymerfolie lokal ändern. Dies kann mit Hilfe eines Lesestrahls in dem Datenlaufwerk erfaßt werden. Durch Fokussieren des Schreibstrahls oder Lesestrahls läßt sich Information gezielt in eine vorgewählte Lage des Informationsträgers einschreiben bzw. daraus auslesen. Der Wickelkern kann optisch transparent sein und in seinem Zentralbereich eine Aussparung aufweisen, die zum Aufnehmen der Schreib- und Leseeinrichtung eines Datenlaufwerks dient. Dabei wird die Schreib- und Leseeinrichtung relativ zu dem Datenspeicher bewegt, während der Datenspeicher ruht, so daß der Datenspeicher nicht im Hinblick auf eine schnelle Rotationsbewegung ausgewuchtet zu sein braucht.

Bei diesem Datenspeicher erweist es sich als nachteilig, daß das innenliegende Ende des Informationsträgers beim Aufwickeln auf den zylindrischen Wickelkern eine Art Vorsprung bildet, an den sich die nachfolgenden Lagen des Informationsträgers anpassen müssen, so daß sich Abweichungen von einer idealen Spiralform ergeben. Insbesondere ändert sich der radiale Abstand der inneren Lagen des Informationsträgers vom Zentrum des Wickelkerns im Bereich des Vorsprungs ziemlich abrupt. Dies kann beim Auslesen oder Einschreiben von Daten zu Schwierigkeiten bei der Nachführung des Fokus des Lesestrahls bzw. des Schreibstrahls führen.

Ferner sei auf die JP-A-06 020 292 hingewiesen, die zur formulierung des Oberbegriffs des Anspruchs 1 heran gezogen wurde. In der JP-A-06 022 92 ist ein Datenspeicher mit einem spiralartig auf einem Wickelkern aufgewickelten Informationsträger für optisch auslesbare Informations einheiten beschrieben.

Es ist Aufgabe der Erfindung, einen Datenspeicher mit einem spiralartig auf einen Wickelkern aufgewickelten Informationsträger für optisch auslesbare Informationseinheiten zu schaffen, aus dem sich die Information problemlos auslesen läßt.

Diese Aufgabe wird gelöst durch einen Datenspeicher mit den Merkmalen des Anspruchs 1. Vorteilhafte Ausgestaltungen der Erfindung ergeben sich aus den abhängigen Ansprüchen.

Der erfindungsgemäße Datenspeicher hat einen spiralartig auf einen Wickelkern aufgewickelten Informationsträger für optisch auslesbare Informationseinheiten. Der Wickelkern ist an seiner Außenkontur spiralartig gestaltet und weist eine Stufe auf, deren Höhe an die Dicke des Informationsträgers angepaßt ist, wobei das innenliegende Ende des Informationsträgers an der Stufe oder im Bereich der Stufe an dem Wickelkern anliegt.

Dadurch, daß die Außenkontur des Wickelkerns bereits spiralartig gestaltet ist und das innenliegende Ende des Informationsträgers an der Stufe oder in relativ geringem Abstand dazu an dem Wickelkern anliegt, trifft der Informationsträger bei Beginn seiner zweiten Windung auf eine weitgehend glatte Oberfläche, so daß sich der radiale Abstand des Informationsträgers vom Zentrum des Wickelkerns über die gesamte Länge des Informationsträgers allmählich vergrößert (so, wie es weitgehend einer idealen Spiralform entspricht) und nicht abrupt. Die Erfindung wirkt sich also besonders günstig auf Datenspeicher aus, bei denen der Informationsträger in mehreren Lagen gewickelt ist, und hierbei profitieren insbesondere die inneren Lagen. Wenn der Lesestrahl oder - falls der Datenspeicher auch beschreibbar ist - der Schreibstrahl den Informationsträger abtastet, ist es demnach nicht erforderlich, den Fokus an bestimmten Stellen plötzlich zu verschieben, weshalb sich höhere Lese- und gegebenenfalls Schreibgeschwindigkeiten als bei dem vorbekannten Datenspeicher erreichen lassen.

Bei einer bevorzugten Ausführungsform der Erfindung ist die spiralartig gestaltete Außenkontur mit der Stufe integral an dem Wickelkern ausgebildet.

Bei einer alternativen Ausgestaltung weist der Wickelkern ein zylinderähnliches Bauteil und ein separates Bauteil auf, das das zylinderähnliche Bauteil zumindest teilweise umgibt und an dem die spiralartig gestaltete Außenkontur mit der Stufe ausgebildet ist. Dabei kann das separate Bauteil zumindest bei der Herstellung des Wickelkerns flexibel sein, eine keilähnliche Grundform aufweisen, wobei die Keillänge kleiner als der oder gleich dem Umfang des zylinderähnlichen Bauteils ist und die Keilhöhe der Höhe der Stufe entspricht, und auf das zylinderähnliche Bauteil aufgelegt sein. Mit Hilfe des separaten Bauteils wird also die von der Zylinderform abweichende spiralartige Außenkontur des Wickelkerns ausgebildet. Die Keillänge kann kleiner als der Umfang des zylinderähnlichen Bauteils sein; dann ergeben sich jedoch stärkere Abweichungen von der idealen Spiralform. Vorzugsweise werden das separate Bauteil und das zylinderähnliche Bauteil bei der Herstellung des Wickelkerns miteinander verklebt.

Bei einer bevorzugten Ausführungsform der Erfindung ist der Wickelkern optisch transparent und weist in seinem Zentralbereich eine Aussparung auf. In diesem Fall ist es möglich, in der Aussparung im Zentralbereich des Wickelkerns eine Leseeinrichtung und optional eine Schreibeinrichtung eines auf den Datenspeicher abgestimmten Laufwerks anzuordnen und zum Lesen bzw. zum Schreiben von Information relativ zu dem Datenspeicher zu bewegen, während der Datenspeicher ruht. Ein ruhender Datenspeicher hat den Vorteil, daß er nicht ausgewuchtet sein muß, um hohe Rotationsgeschwindigkeiten zu ermöglichen, was sich günstig auf die Herstellungskosten auswirkt.

Vorzugsweise weist der Informationsträger eine Polymerfolie auf, deren Brechungsindex lokal durch Erwärmung veränderbar ist. Als Material für die Polymerfolie kommen zum Beispiel Polymethylmethacrylat (PMMA) oder biaxial orientiertes Polypropylen (BOPP) in Betracht. Wenn Polypropylen nach der Extrusion zur Folie in zwei Ebenen vorgespannt wird, wird im Material eine hohe Eigenenergie gespeichert. Bei einer lokalen Erwärmung, zum Beispiel durch einen Schreibstrahl, kommt es dann zu einer starken Materialänderung durch Rückverformung, und zwar bereits bei Deposition einer relativ geringen Energiemenge pro Flächeneinheit. Auf diese Weise läßt sich zum Beispiel eine Änderung des Brechungsindex von etwa 0,2 über eine Fläche für eine gespeicherte Informationseinheit mit einem Durchmesser von etwa 1 µm erzielen.

Der Polymerfolie kann ein Absorber zugeordnet sein, der dazu eingerichtet ist, einen Schreibstrahl zumindest teilweise zu absorbieren und die dabei erzeugte Wärme zumindest teilweise lokal an die Polymerfolie abzugeben. Der Absorber enthält zum Beispiel Farbstoffmoleküle, die in der Polymerfolie oder in einer zu der Polymerfolie benachbarten Adhäsionsschicht enthalten sind, und ermöglicht eine zur Veränderung des Brechungsindex ausreichende lokale Erwärmung der Polymerfolie bei relativ geringer Intensität des Schreibstrahls.

Wie bereits erwähnt, kommen die Vorteile der Erfindung besonders zum Tragen, wenn der Informationsträger in mehreren Lagen auf den Wickelkern aufgewickelt ist. Die Polymerfolie ist daher vorzugsweise in mehreren Polymerfolienlagen aufgewickelt, durch die hindurch Information in eine vorgewählte Polymerfolienlage schreibbar oder aus einer vorgewählten Polymerfolienlage auslesbar ist. Dabei kann zwischen benachbarten Polymerfolienlagen jeweils eine Adhäsionsschicht angeordnet sein, um die Polymerfolienlagen untereinander zu fixieren. So können zum Beispiel 10 bis 30 Polymerfolienlagen aufgewickelt sein, aber auch mehr oder weniger. Bei einer Dicke der Polymerfolie zwischen 10 µm und 100 µm, vorzugsweise unter 50 µm oder um 35 µm, läßt sich die Information auf unterschiedlichen Polymerfolienlagen mit Hilfe von zum Beispiel aus der DVD-Technologie bekannten Lese-und Schreibeinrichtungen gut auflösbar voneinander trennen. Eine Adhäsionsschicht kann zum Beispiel eine Dicke im Bereich zwischen 1 µm und 40 µm haben, vorzugsweise unter 25 µm oder um 2 µm. Als Adhäsionsmittel eignet sich zum Beispiel ein luftblasenfreier Acrylatkleber, der z.B. chemisch oder durch UV- bzw. Elektronenstrahlung vernetzt wird. Wenn zwischen benachbarten Polymerfolienlagen eine Adhäsionsschicht angeordnet ist, sollte die Höhe der Stufe des Wickelkerns ungefähr der Dicke der Polymerfolie plus der Dicke der Adhäsionsschicht entsprechen.

Vorzugsweise weicht der Brechungsindex der Adhäsionsschicht nur geringfügig vom Brechungsindexs der Polymerfolie ab, um störende Reflexionen des Lesestrahls oder des Schreibstrahls an einer Grenzschicht zwischen einer Polymerfolienlage und einer benachbarten Adhäsionsschicht zu minimieren. Besonders vorteilhaft ist es, wenn der Unterschied der Brechungsindizes kleiner als 0,005 ist. Ein bestehender Unterschied der Brechungsindizes kann jedoch zum Formatieren des Datenspeichers genutzt werden.

Im folgenden wird die Erfindung anhand von Ausführungsbeispielen näher erläutert. Die Zeichnungen zeigen in
- Figur 1: einen Datenspeicher, der einen spiralartig aufgewickelten Informationsträger und einen erfindungsgemäß gestalteten Wickelkern aufweist, in schematischer perspektivischer Darstellung, wobei innerhalb des Wickelkerns Teile eines auf den Datenspeicher abgestimmten Laufwerks angeordnet sind,
- Figur 2: einen schematischen Querschnitt durch einen herkömmlichen Wickelkern mit den inneren Lagen eines spiralartig aufgewickelten Informationsträgers,
- Figur 3: einen schematischen Querschnitt durch eine erste Ausführungsform eines erfindungsgemäß gestalteten Wickelkerns mit den innersten Lagen eines spiralartig aufgewickelten Informationsträgers und
- Figur 4: einen schematischen Querschnitt durch eine zweite Ausführungsform eines erfindungsgemäß gestalteten Wickelkerns mit den innersten Lagen eines spiralartig aufgewickelten Informationsträgers.

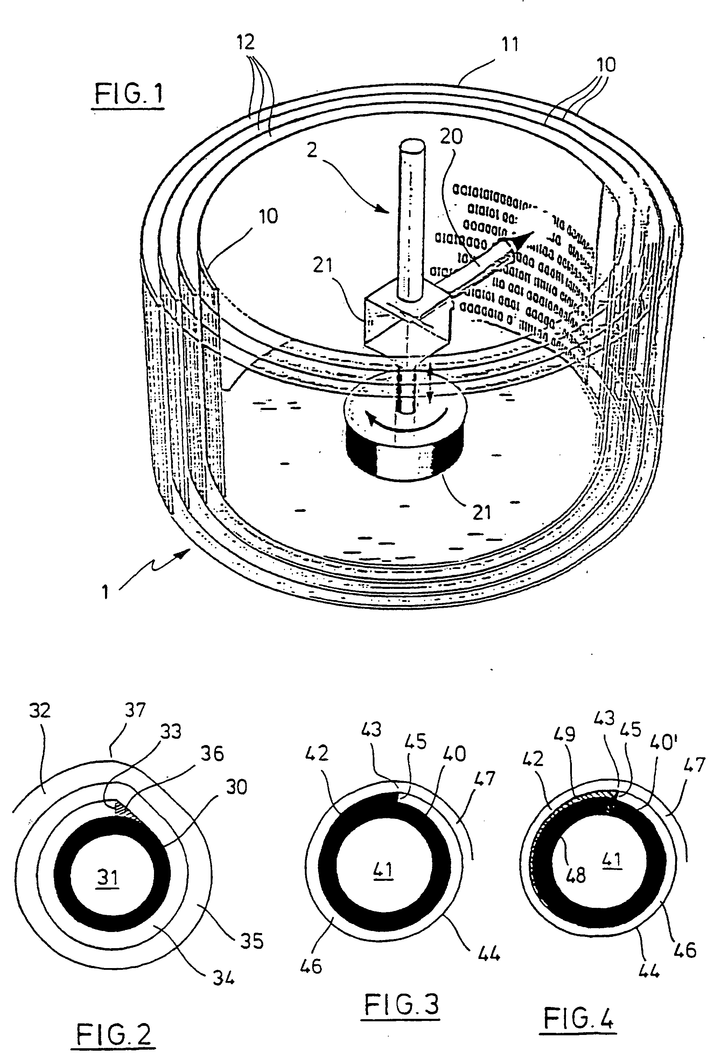

Figur 1 zeigt in schematischer Darstellung einen Datenspeicher 1 und eine Schreib- und Leseeinrichtung 2 eines auf den Datenspeicher 1 abgestimmten Laufwerks. Der Datenspeicher 1 weist eine Anzahl von Lagen 10 einer als Informationsträger dienenden Polymerfolie 11 auf, die spiralartig auf einen optisch transparenten Wickelkern aufgewickelt ist. Der Wickelkern ist in Figur 1 der Übersichtlichkeit halber nicht dargestellt; er befindet sich innerhalb der innersten Lage 10. Ausführungsformen des Wickelkerns sind weiter unten anhand der Figuren 3 und 4 näher beschrieben. Zur besseren Veranschaulichung sind die einzelnen Lagen. 10 der Polymerfolie 11 in Figur 1 als konzentrische Kreisringe gezeigt, obwohl die Lagen 10 durch spiralartiges Wickeln der Polymerfolie 11 ausgebildet sind. Zwischen benachbarten Lagen 10 der Polymerfolie 11 ist jeweils eine Adhäsionsschicht 12 angeordnet. Aus Gründen der Übersichtlichkeit sind die Adhäsionsschichten 12 in Figur 1 in nicht maßstäblich vergrößerter Dicke eingezeichnet.

Die Polymerfolie 11 besteht im Ausführungsbeispiel aus biaxial orientiertem Polypropylen und wurde vor dem Wickeln in beiden Flächenrichtungen vorgespannt. Im Ausführungsbeispiel hat die Polymerfolie 11 eine Dicke von 35 µm; andere Dicken im Bereich von 10 µm bis 100 µm oder auch außerhalb dieses Bereichs liegende Dicken sind ebenfalls denkbar. Die Adhäsionsschichten 12 sind gasblasenfrei und bestehen im Ausführungsbeispiel aus Acrylatkleber, dem ein Absorber-Farbstoff beigemischt ist, bei einer Dicke von 23 µm, wobei bevorzugte Schichtdicken zwischen 1 µm und 40 µm liegen. Im Ausführungsbeispiel enthält der Datenspeicher 1 zwanzig Lagen 10 der Polymerfolie 11 und hat einen Außendurchmesser von etwa 30 mm. Die Höhe des Wickelzylinders beträgt 19 mm. Eine andere Anzahl von Lagen 10 oder andere Abmessungen sind ebenfalls möglich. Die Anzahl der Wicklungen oder Lagen 10 kann zum Beispiel zwischen zehn und dreißig liegen, aber auch größer als dreißig sein.

Die im Innenraum des Wickelkerns angeordnete Schreib- und Leseeinrichtung 2 enthält einen Schreib- und Lesekopf 20, der mit Hilfe einer Mechanik 21 in den Richtungen der eingezeichneten Pfeile gedreht und axial hin- und herbewegt werden kann. Der Schreib- und Lesekopf 20 weist optische Elemente auf, mit deren Hilfe ein von einem in Figur 1 nicht dargestellten Laser erzeugter Lichtstrahl (zum Beispiel der Wellenlänge 630 nm oder 532 nm) auf die einzelnen Lagen 10 der Polymerfolie 11 fokussiert werden kann. Da der Schreib- und Lesekopf 20 mit Hilfe der Mechanik 21 bewegt wird, kann er alle Lagen 10 des Datenspeichers 1 vollständig abtasten. Im Ausführungsbeispiel ruht dabei der Datenspeicher 1. Er braucht also nicht im Hinblick auf eine hohe Rotationsgeschwindigkeit ausgewuchtet zu sein (und muß auch nicht abgewickelt bzw. umgespult werden), im Gegensatz zu dem Schreibund Lesekopf 20. Der Übersichtlichkeit halber sind in Figur 1 die zum Auswuchten des Schreib- und Lesekopfs 20 vorgesehenen Elemente nicht gezeigt. Der erwähnte Laser befindet sich außerhalb des Schreib- und Lesekopfes 20 und ist stationär; der Laserstrahl wird über optische Elemente in den Schreib- und Lesekopf 20 gelenkt.

Zum Speichern oder Einschreiben von Information in den Datenspeicher 1 wird der Laser im Ausführungsbeispiel mit einer Strahlleistung von etwa 1 mW betrieben. Der Laserstrahl dient dabei als Schreibstrahl und wird auf eine vorgewählte Lage 10 der Polymerfolie 11 fokussiert, so daß der Strahlfleck kleiner als 1 µm ist, wobei die Lichtenergie in Form kurzer Pulse von etwa 10 µs Dauer eingebracht wird. Die Energie des Schreibstrahls wird in dem Strahlfleck absorbiert, begünstigt durch den Absorber in der benachbarten Adhäsionsschicht 12, was zu einer lokalen Erwärmung der Polymerfolie 11 und damit zu einer lokalen Änderung des Brechungsindex und der Reflektivität führt.

Um gespeicherte Information aus dem Datenspeicher 1 auszulesen, wird der Laser im Continuous-Wave-Modus (CW-Modus) betrieben. In Abhängigkeit von der gespeicherten Information wird der auf die gewünschte Stelle fokussierte Lesestrahl reflektiert, und die Intensität des reflektierten Strahls wird von einem Detektor in der Schreib- und Leseeinrichtung 2 erfaßt.

Der Datenspeicher kann auch von einer Ausführungsform sein, die vom Benutzer nicht beschreibbar ist. In diesem Fall enthält er vom Hersteller eingeschriebene Informationseinheiten. Eine Schreibfunktion im Datenlaufwerk des Benutzers erübrigt sich dann.

Über die Informationseinheiten kann die Information binär abgespeichert sein, d.h. auf der Polymerfolie werden an der Stelle einer Informationseinheit zwei Zustände unterschieden. Es ist jedoch auch eine Speicherung in mehreren Graustufen möglich, zum Beispiel durch definiertes Einstellen des Brechungsindex der Polymerfolie an der Stelle einer Informationseinheit.

Im folgenden werden verschiedene Ausführungsformen für den Wickelkern des Datenspeichers näher betrachtet.

Figur 2 zeigt zunächst einen herkömmlichen Wickelkern 30 in einer schematischen Querschnittsansicht. Der Wickelkern 30 ist als zylindrische Hülse mit einer Aussparung 31 zum Aufnehmen der Schreib- und Leseeinrichtung 2 eines Datenlaufwerks gestaltet. Um den Wickelkern 30 ist ein Informationsträger 32 gewickelt, beginnend an seinem innenliegenden Ende 33. Bei Verwendung der Terminologie von Figur 1 umfaßt der Informationsträger 32 die Polymerfolie 11 und eine dazu benachbarte Adhäsionsschicht 12. Die innerste Lage 34 des Informationsträgers 32 wird durch die erste Windung um den Wickelkern 30 gebildet, danach beginnt die folgende Lage 35. Da die Außenkontur des Wickelkerns 30 kreisförmig ist, muß der Informationsträger 32 bei Beginn der folgenden Lage 35 im Bereich seines innenliegenden Endes 33 radial nach außen ausweichen, so daß ein Hohlraum 36 entsteht, siehe Figur 2. Dadurch zeigen die Lagen des Informationsträgers 32, insbesondere seine inneren Lagen, im Bereich einer Stelle 37 deutliche Abweichungen von einem idealen spiralartigen Verlauf. Wenn Informationen aus dem Informationsträger 32 ausgelesen oder dort eingeschrieben werden sollen, muß der Fokus der Optik der Schreib- und Leseeinrichtung im Bereich der Stelle 37 sehr schnell nachgeführt werden, damit eine ausgewählte Lage fokussiert bleibt. Dies reduziert die Geschwindigkeit, mit der Daten geschrieben und gelesen werden können, und ist daher von Nachteil.

In Figur 3 ist ein erfindungsgemäß gestalteter Wickelkern 40 in schematischer Schnittansicht dargestellt. Der Wickelkern 40 hat ebenfalls eine Aussparung 41 zum Aufnehmen einer Schreib- und Leseeinrichtung. Die Außenkontur 42 des Wickelkerns 40 ist dagegen nicht kreisförmig, sondern spiralartig ausgeformt und weist eine Stufe 43 auf, siehe Figur 3. Die Höhe der Stufe 43, d.h. die Größe des radialen Sprungs der Außenkontur 42 an der Stufe 43, ist an die Dicke des hier mit 44 bezeichneten Informationsträgers angepaßt, der auf den Wickelkern 40 aufgewickelt ist. Im Ausführungsbeispiel umfaßt der Informationsträger 44 eine Polymerfolie 11, wobei sich zwischen benachbarten Lagen 10 der Polymerfolie 11 jeweils eine Adhäsionsschicht 12 befindet. In diesem Fall ist also die Dicke des Informationsträger 44 gleich der Dicke der Polymerfolie 11 plus der Dicke einer Adhäsionsschicht 12.

Figur 3 zeigt, wie das innenliegende Ende des Informationsträgers 44 an der Stufe 43 anliegt. Die innerste Lage 46 liegt, vorzugsweise über eine Adhäsionsschicht, direkt an der Außenkontur 42 des Wickelkerns 40 an. Bei Beginn der folgenden Lage 47 sorgt die Stufe 43 dafür, daß der Informationsträger 44 weitgehend auf einer idealen Spirale verläuft, wie aus Figur 3 ersichtlich. Insbesondere wird ein abrupter Sprung in radialer Richtung verhindert, wie er bei dem herkömmlichen Wickelkern 30 auftritt. Das innenliegende Ende 45 des Informationsträgers 44 muß nicht direkt an der Stufe 43 anliegen; akzeptabel ist auch ein gewisser Abstand zu der Stufe 43. Entscheidend ist, daß ein ungünstiger Verlauf des Informationsträgers 44, also ein Verlauf ähnlich dem in Figur 2 dargestellten, vermieden wird.

Der Wickelkern 40 gemäß Figur 3 ist einstückig aus einem optisch transparenten Kunststoff geformt, so daß die spiralartig gestaltete Außenkontur 42 mit der Stufe 43 integral an dem Wickelkern 40 ausgebildet ist.

Figur 4 zeigt eine andere Ausführungsform des Wickelkerns, der hier mit 40' bezeichnet ist. Teile und Komponenten, die mit denen der in Figur 3 dargestellten Ausführungsform übereinstimmen, sind in Figur 4 mit den gleichen Bezugszeichen versehen wie in Figur 3. Der Wickelkern 40' ist jedoch nicht einstückig ausgebildet, sondern er weist ein zylinderähnliches Bauteil 48 und ein separates Bauteil 49 auf, das das zylinderähnliche Bauteil 48 über etwa die Hälfte seines Umfangs umgibt. Die weitgehend spiralartige Außenkontur 42 des Wickelkerns 40' ist dabei wesentlich durch das separate Bauteil 49 bestimmt.

Im Ausführungsbeispiel hat das separate Bauteil 49 eine keilähnliche Grundform, wobei die Keillänge etwa dem halben Umfang des zylinderähnlichen Bauteils 48 entspricht. Die Keilhöhe stimmt mit der Dicke des Informationsträgers 44 überein. Bei der Herstellung des Wickelkerns 40' ist das separate Bauteil 49 flexibel und kann dann an die Form des zylinderähnlichen Bauteils 48 angepaßt werden, mit dem es verklebt ist. Wenn das separate Bauteil 49 länger ist, als in dem Ausführungsbeispiel dargestellt, kann eine noch bessere Anpassung der Form des aufgewickelten Informationsträgers 44 an eine ideale Spiralform erzielt werden. Denkbar ist zum Beispiel, daß die Keillänge des separaten Bauteils 49 mit dem Umfang des zylinderähnlichen Bauteils 48 übereinstimmt, so daß das separate Bauteil 49 einmal um das zylinderähnliche Bauteil 48 gelegt ist.

## Patentansprüche

1. Datenspeicher, mit einem spiralartig auf einen Wickelkern (40) aufgewickelten Informationsträger (44) für optisch auslesbare Informationseinheiten, **dadurch gekennzeichnet daß** der Wickelkern (40) an seiner Außenkontur (42) spiralartig gestaltet ist und eine Stufe (43) aufweist, deren Höhe an die Dicke des Informationsträgers (44) angepaßt ist, und wobei das innenliegende Ende (45) des Informationsträgers (44) an der Stufe (43) oder im Bereich der Stufe (43) an dem Wickelkern (40) anliegt.

2. Datenspeicher nach Anspruch 1, **dadurch gekennzeichnet, daß** die spiralartig gestaltete Außenkontur (42) mit der Stufe (43) integral an dem Wickelkern (40) ausgebildet ist.

3. Datenspeicher nach Anspruch 1, **dadurch gekennzeichnet, daß** der Wickelkern (40') ein zylinderähnliches Bauteil (48) und ein separates Bauteil (49) aufweist, das das zylinderähnliche Bauteil (48) zumindest teilweise umgibt und an dem die spiralartig gestaltete Außenkontur (42) mit der Stufe (43) ausgebildet ist.

4. Datenspeicher nach Anspruch 3, **dadurch gekennzeichnet, daß** das separate Bauteil (49) zumindest bei der Herstellung des Wickelkerns (40') flexibel ist, eine keilähnliche Grundform aufweist, wobei die Keillänge kleiner als der oder gleich dem Umfang des zylinderähnlichen Bauteils (48) ist und die Keilhöhe der Höhe der Stufe (43) entspricht, und auf das zylinderähnliche Bauteil (48) aufgelegt ist.

5. Datenspeicher nach einem der Ansprüche 1 bis 4, **dadurch gekennzeichnet, daß** der Informationsträger (44) eine Polymerfolie (11) aufweist, deren Brechungsindex lokal durch Erwärmung veränderbar ist.

6. Datenspeicher nach Anspruch 5, **dadurch gekennzeichnet, daß** der Polymerfolie (11) ein Absorber zugeordnet ist, der dazu eingerichtet ist, einen Schreibstrahl zumindest teilweise zu absorbieren und die dabei erzeugte Wärme zumindest teilweise lokal an die Polymerfolie (11) abzugeben.

7. Datenspeicher nach Anspruch 5 oder 6, **dadurch gekennzeichnet, daß** die Polymerfolie (11) in mehreren Polymerfolienlagen (10) aufgewickelt ist, durch die hindurch Information in eine vorgewählte Polymerfolienlage (10) schreibbar oder aus einer vorgewählten Polymerfolienlage (10) auslesbar ist.

8. Datenspeicher nach Anspruch 7, **dadurch gekennzeichnet, daß** zwischen benachbarten Polymerfolienlagen (10) jeweils eine Adhäsionsschicht (12) angeordnet ist.

9. Datenspeicher nach Anspruch 8, **dadurch gekennzeichnet, daß** der Brechungsindex der Adhäsionsschicht (12) nur geringfügig vom Brechungsindex der Polymerfolie (11) abweicht.

10. Datenspeicher nach einem der Ansprüche 1 bis 9, **dadurch gekennzeichnet, daß** der Wickelkern (40) optisch transparent ist und in seinem Zentralbereich eine Aussparung (41) aufweist.

11. Verwendung eines Datenspeichers (1) nach Anspruch 10 in einem darauf abgestimmten Laufwerk, das eine Leseeinrichtung (2) und optional eine Schreibeinrichtung (2) aufweist, wobei die Leseeinrichtung (2) und die optionale Schreibeinrichtung (2) in der Aussparung (41) im Zentralbereich des Wickelkerns (40) angeordnet sind und zum Lesen bzw. Schreiben von Information relativ zu dem Datenspeicher (1) bewegt werden, während der Datenspeicher (1) ruht.

## Claims

1. A data storage medium having an information carrier (44) wound onto a winding core (40) in a spiral manner for optically readable information units, **characterized in that** the winding core (40) is configured in a spiral manner on its outer contour (42) and has a step (43), whose height is matched to the thickness of the information carrier (44), and wherein the inner end (45) of the information carrier (44) rests on the winding core (40) at the step (43) or in the area of the step (43).

2. The data storage medium as claimed in claim 1, **characterized in that** the spirally configured outer contour (42) with the step (43) is formed integrally on the winding core (40).

3. The data storage medium as claimed in claim 1, **characterized in that** the winding core (40') has a component (48) similar to a cylinder and a separate component (49), which at least partly surrounds the component (48) similar to a cylinder and on which the spirally configured outer contour (42) with the step (43) is formed.

4. The data storage medium as claimed in claim 3, **characterized in that** the separate component (49) is flexible, at least during the production of the winding core (40'), has a basic shape similar to a wedge, the length of the wedge being less than or equal to the periphery of the component (48) similar to a cylinder, and the height of the wedge corresponding to the height of the step (43), and is placed onto the component (48) similar to a cylinder.

5. The data storage medium as claimed in one of claims 1 to 4, **characterized in that** the information carrier (44) comprises a polymer film (11) whose refractive index can be changed locally by heating.

6. The data storage medium as claimed in claim 5, **characterized in that** an absorber is assigned to the polymer film (11), which absorber is set up at least partly to absorb a write beam and to transfer the generated heat at least partly, locally, to the polymer film (11).

7. The data storage medium as claimed in claim 5 or 6, **characterized in that** the polymer film (11) is wound up in a plurality of polymer film plies (10), through which information can be written into a preselected polymer film ply (10) or can be read from a preselected polymer film ply (10).

8. The data storage medium as claimed in claim 7, **characterized in that** an adhesion layer (12) is in each case provided between adjacent polymer film plies (10).

9. The data storage medium as claimed in claim 8, **characterized in that** the refractive index of the adhesion layer (12) differs only slightly from the refractive index of the polymer film (11).

10. The data storage medium as claimed in one of claims 1 to 9, **characterized in that** the winding core (40) is optically transparent and has a recess (41) in its central area.

11. The use of a data storage medium (1) as claimed in claim 10 in a drive which is tuned to it and comprises a read device (2) and, optionally, a write device (2), the read device (2) and the optional write device (2) being arranged in the recess (41) in the central area of the winding core (40) and being moved relative to the data storage medium (1), while the data storage medium (1) is stationary, for the purpose of reading and/or writing information.

## Revendications

1. Mémoire de données comportant un support d'informations (44) enroulé en spirale sur un noyau bobiné (40), pour des unités d'informations lisibles optiquement, **caractérisée en ce que** le noyau d'enroulement (40) est agencé avec une forme spiralée au niveau de son contour extérieur (42) et comporte une partie étagée (43), dont la hauteur est adaptée à l'épaisseur du support d'informations (44), et dans lequel l'extrémité intérieure (45) du support d'informations (44) s'applique contre la partie étagée (43) ou dans la zone de la partie étagée (43) contre le noyau d'enroulement (40).

2. Mémoire de données selon la revendication 1, **caractérisée en ce que** le contour extérieur de forme spiralée (42) pourvu de la partie étagée (43) est réalisé d'un seul tenant sur le noyau d'enroulement (40).

3. Mémoire de données selon la revendication 1, **caractérisée en ce que** le noyau d'enroulement (40) comporte un composant (48) similaire à un cylindre et un composant séparé (49), qui entoure au moins partiellement le composant similaire à un cylindre (48) sur lequel est formé le contour extérieur (42) agencé avec une forme spiralée et comportant la partie étagée (43).

4. Mémoire de données selon la revendication 3, **caractérisée en ce que** le composant séparé (49) est flexible au moins lors de la fabrication du noyau d'enroulement (40), possède une forme de base similaire à un coin, la longueur du coin étant inférieure ou égale à la circonférence du composant (48) similaire à un cylindre, et la hauteur du coin correspondant à la hauteur de la partie étagée (43), et que le composant séparé (49) sur le composant (48) similaire à un cylindre.

5. Mémoire de données selon l'une des revendications 1 à 4, **caractérisée en ce que** le support d'informations (44) comporte une feuille polymère (11), dont l'indice de réfraction peut être modifié localement par échauffement.

6. Mémoire de données selon la revendication 5, **caractérisée en ce qu'**à la feuille polymère (11) est associé un absorbeur, qui est conçu de manière à absorber au moins en partie un faisceau d'écriture et à délivrer au moins en partie localement la chaleur produite à la feuille polymère (11).

7. Mémoire de données selon la revendication 5 ou 6, **caractérisée en ce que** la feuille polymère (11) est enroulée sur plusieurs couches (10), à travers lesquelles une information peut être écrite dans une couche présélectionnée (13) de la feuille polymère ou peut être lue à partir d'une couche présélectionnée (13) de la feuille polymère.

8. Mémoire de données selon la revendication 7, **caractérisée en ce qu'**une couche adhésive respective (12) est disposée entre des couches voisines (10) de la feuille polymère.

9. Mémoire de données selon la revendication 8, **caractérisée en ce que** l'indice de réfraction de la couche adhésive (12) diffère seulement légèrement de l'indice de réfraction de la feuille polymère (11).

10. Mémoire de données selon l'une des revendications 1 à 9, **caractérisée en ce que** le noyau d'enroulement (40) est transparent optiquement et possède un évidement (41) dans sa partie centrale.

11. Utilisation d'une mémoire de données (1) selon la revendication 10, dans un lecteur/enregistreur accordé sur cette mémoire, qui comporte un dispositif de lecture (2) et facultativement un dispositif d'écriture (2), le dispositif de lecture (2) et le dispositif d'écriture facultatif (2) étant disposés dans l'évidement (41) situé dans la zone centrale du noyau d'enroulement (40) et étant déplacés pour la lecture oul'écriture d'informations, par rapport à la mémoire de données (1), alors que la mémoire de données (1) est à l'arrêt.
